# EUROPEAN PATENT APPLICATION

(11) **EP 4 734 592 A1**
(43) Date of publication of application: **29.04.2026**
(21) Application number: 24209203.9
(22) Date of filing: 28.10.2024
(51) Int. Cl.: H04W 24/02, H04L 41/5054

(54) **A SYSTEM AND METHOD FOR PROVIDING INFRASTRUCTURE SERVICES**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)
(74) Representative: Siemens Patent Attorneys

(57) **Abstract**

The invention relates to a system and a method for providing infrastructure services comprising a mobile infrastructure including mobile infrastructure nodes adapted to provide infrastructure services for application nodes hosted in virtual cells clustering applications with common application requirements geographically and an orchestration system adapted to perform a virtual cell configuration process to assign infrastructure nodes to the virtual cells according to application requirements.

## Description

The invention relates to a system and method for providing infrastructure services by infrastructure nodes of a mobile infrastructure to applications running on application nodes hosted inside virtual cells.

Global ubiquitous access to communication and computing at industrial grade is essential to a broad set of industrial use cases ranging from smart cities, mobility, transportation, logistics, manufacturing energy distribution, to mobile automation. This becomes even more important as the global political, social, and environmental conditions demand to operate all kind of critical infrastructure in a resilient, sustainable, and efficient manner.

In conventional communication systems, communication and computing are mostly fixed with respect to location. Thus, in conventional systems only the mobility of application nodes is considered when orchestrating resources of the system without considering the mobility of infrastructure nodes.

Against this background, a problem addressed by the present invention is that of providing a method and a system for providing infrastructure services by infrastructure nodes of a mobile infrastructure where resources of the system are orchestrated taking into account the mobility of the infrastructure nodes.

This problem is solved according to the invention by a system for providing infrastructure services having the features of claim 1 and/or by a method for providing infrastructure services having the features of claim 15.

According thereto, the following is provided:
A system for providing infrastructure services comprising a mobile infrastructure including mobile infrastructure nodes adapted to provide infrastructure services for application nodes hosted in virtual cells clustering applications with common application requirements geographically and an orchestration system adapted to perform a virtual cell configuration process to assign infrastructure nodes to the virtual cells according to application requirements.

A method for providing infrastructure services by infrastructure nodes of a mobile infrastructure to applications running on application nodes hosted inside virtual cells clustering applications with common application requirements geographically, wherein a virtual cell configuration process is performed continuously by an orchestration system to assign infrastructure nodes to the virtual cells according to application requirements.

The system and method according to the present invention provide a significant reduction of configuration complexity for industrial applications and corresponding devices, as the mobility of the communication and computing infrastructure is completely hidden from the applications by definition of virtual cells, which are continuously served by the mobile infrastructure nodes, wherein the virtual cells are continuously and automatically reconfigured.

In the system and method according to the present invention both, the infrastructure nodes and the applications nodes, can be mobile. Consequently, the orchestration system is adapted to perform a continuous orchestrating of the available resources and resource demands.

The system and method according to the present invention are based on the concept of a virtual infrastructure. The virtual cells take advantage of the locality of terrestrial application components and nodes.

By making use of virtual cells the changing infrastructure is hidden from the application nodes such that they can be designed in a similar manner as before in existing conventional systems with static infrastructure.

The system for providing infrastructure services comprises dynamic infrastructure cells. The employed orchestration system can perform a resource availability prediction and provides planning for high mobility communication and for available computing infrastructures.

Advantageous configurations and developments emerge from the further dependent claims and from the description with reference to the figures of the drawings.

In a possible embodiment of the system for providing infrastructure services its orchestration system is adapted to update during the virtual cell configuration process continuously virtual cell configurations of virtual cells in response to application requirements received from application nodes and/or in response to capabilities offered by the mobile infrastructure nodes of the mobile infrastructure and/or in response to a geographic availability of the mobile infrastructure nodes with respect to the virtual cells.

In a possible embodiment of the system for providing infrastructure services mobile node configurations of mobile infrastructure nodes of the mobile infrastructure are updated during the continuous virtual cell configuration process depending on the virtual cell configurations of virtual cells served by the respective mobile infrastructure nodes.

In a possible embodiment of the system for providing infrastructure services the updated mobile node configurations of the mobile infrastructure nodes are deployed during the continuous virtual cell configuration process in the respective mobile infrastructure nodes to execute infrastructure services.

In a possible embodiment of the system for providing infrastructure services the virtual cell configuration of a virtual cell comprises applications present inside the respective virtual cell including the application requirements of the applications and comprises configurations of application nodes running the applications inside the respective virtual cell and comprises a targeted geographical area.

In a possible embodiment of the system for providing infrastructure services the virtual cell configuration of a virtual cell further comprises virtual network functions of the infrastructure provider, virtual network functions of the user, workload specifications in terms of computing demands and workload runtime reservations.

In a possible embodiment of the system for providing infrastructure services the application requirements include service level objectives of services to be provided by the mobile infrastructure nodes of the mobile infrastructure of the dynamic communication system.

In a possible embodiment of the system for providing infrastructure services the service level objectives comprise bandwidth related service level objectives, storage related service level objective and communication related service level objectives.

While service level agreements (SLAs) are used externally to define an agreement between a company's service and its paid users service level objectives (SLOs) comprise objectives that are measured internally to determine whether the service level agreement is being met.

Service level objectives comprise specific measurable characteristics of the service level agreement such as availability, throughput, frequency, response time, or quality

In a possible embodiment of the system for providing infrastructure services the application requirements include service requirements and operational requirements.

In a possible embodiment of the system for providing infrastructure services the mobile infrastructure comprises a non-terrestrial mobile infrastructure having mobile infrastructure nodes formed by satellites following predefined orbits and flying over the virtual cells provided on ground.

In a possible embodiment of the system for providing infrastructure services a geographic availability of the satellites with respect to the virtual cells on the ground is determined on the basis of orbit data provided by the satellites.

In a possible embodiment of the system for providing infrastructure services the mobile infrastructure comprises a terrestrial mobile infrastructure having mobile infrastructure nodes formed by unmanned aerial vehicles or automated guide vehicles flying over the virtual cells provided on ground.

In a possible embodiment of the system for providing infrastructure services the application nodes comprise mobile application nodes and not-mobile application nodes.

In a possible embodiment of the system for providing infrastructure services the virtual cells comprise a variable size and variable shape and a variable geo-location in a targeted geographical area.

The invention further provides a method for providing infrastructure services by infrastructure nodes of a mobile infrastructure to applications running on application nodes hosted inside virtual cells clustering applications with common application requirements geographically, wherein a virtual cell configuration process is performed continuously by an orchestration system to assign infrastructure nodes to the virtual cells according to application requirements.

The method for providing infrastructure services can comprise a computer-implemented method.

In a possible embodiment of the method for providing infrastructure services the virtual cell configuration process comprises the steps of: providing virtual cells defined by different applications active for the respective virtual cell and having common application requirements; updating mobile node configurations of mobile infrastructure nodes of the mobile infrastructure depending on virtual cell configurations of virtual cells served by the respective mobile infrastructure nodes; and deploying the updated mobile node configurations of the mobile infrastructure nodes in the respective mobile infrastructure nodes to execute infrastructure services.

Where appropriate, the above-mentioned configurations and developments can be combined implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- Fig. 1: shows a possible exemplary embodiment of a system according to the present invention;
- Fig.2: shows a schematic diagram for illustrating a continuous virtual cell configuration process performed by an orchestration system of the system according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

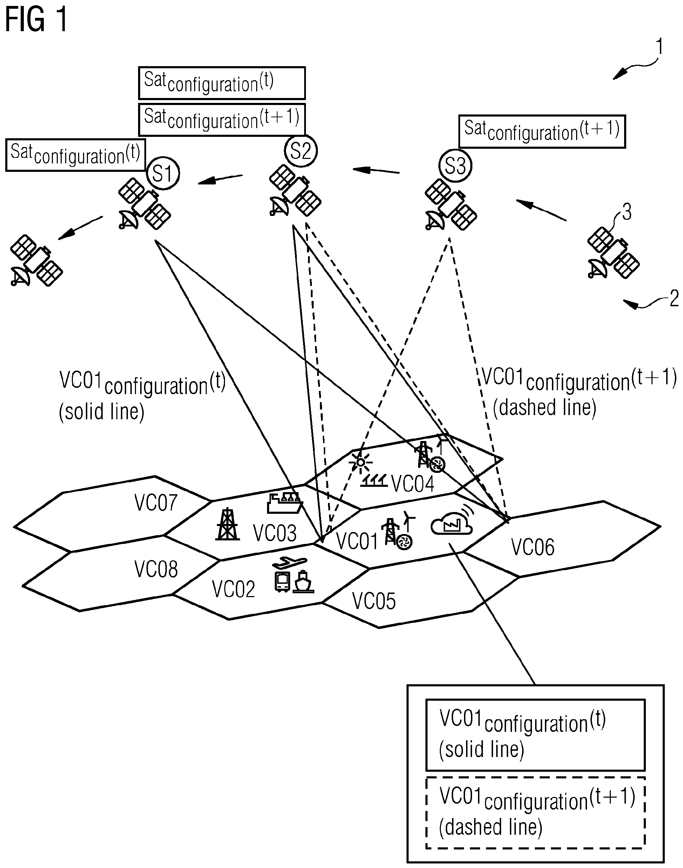

The invention provides according to a first aspect a system 1 for providing infrastructure services comprising a mobile infrastructure 2 including mobile infrastructure nodes 3 adapted to provide infrastructure services for application nodes 4 hosted in virtual cells VCs clustering applications with common application requirements geographically and an orchestration system 5 adapted to perform a virtual cell configuration process to assign infrastructure nodes 3 to the virtual cells VCs according to application requirements. Fig. 1 shows an exemplary embodiment of the system 1 comprising a non-terrestrial mobile infrastructure 2 where the mobile infrastructure nodes 3 are formed by satellites SATs.

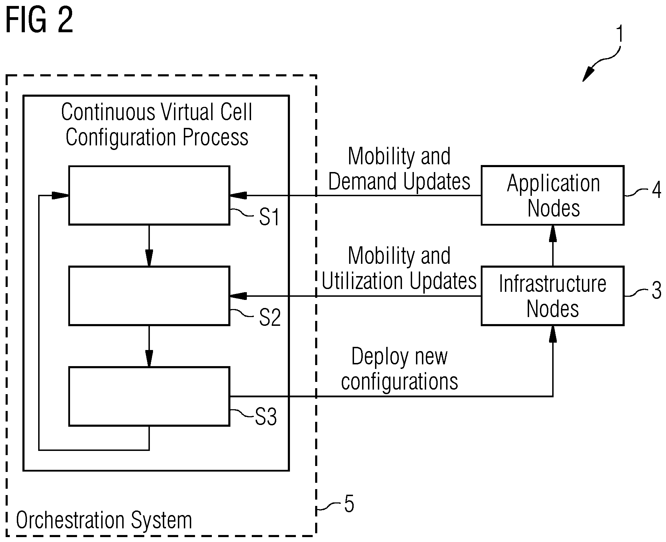

In a possible embodiment of the system 1 for providing infrastructure services its orchestration system 5 is adapted to update during the virtual cell configuration process continuously virtual cell configurations VC-CONFIG of virtual cells VCs. As shown in the flowchart of Fig. 2 in step S1 of the continuous virtual cell configuration process the virtual cell configurations VC-CONFIG of virtual cells VCs is updated in response to application requirements received from application nodes 4 hosted in the virtual cells VCs. The received application requirements can include service level objectives (SLOs) of services to be provided by the mobile infrastructure nodes 3 of the mobile infrastructure 2 of the dynamic system. The service level objectives SLOs can comprise bandwidth related service level objectives, storage related service level objective and communication related service level objectives. The application requirements can include service requirements and operational requirements.

In a possible embodiment of the system 1 for providing infrastructure services the virtual cell configuration VC-CONFIG of a virtual cell VC comprises applications present inside the respective virtual cell VC including the application requirements of the applications and comprises configurations of application nodes 4 running the applications inside the respective virtual cell VC and comprises a targeted geographical area. In a possible embodiment of the system 1 the virtual cell configuration VC-CONFIG of a virtual cell VC can further comprise virtual network functions of the infrastructure provider, virtual network functions of the user, workload specifications in terms of computing demands and workload runtime reservations.

In a possible embodiment of the system 1 for providing infrastructure services mobile node configurations MI-CONFIG of mobile infrastructure nodes 3 of the mobile infrastructure 2 are updated in step S2 during the continuous virtual cell configuration process shown in Fig.2 depending on the virtual cell configurations VC-CONFIG of virtual cells VCs served by the respective mobile infrastructure nodes 3. The update can be performed in step S2 in response to capabilities offered by the mobile infrastructure nodes 3 of the mobile infrastructure 2 and/or in response to a geographic availability of the mobile infrastructure nodes 3 with respect to the virtual cells VCs as illustrated in Fig.2.

In a possible embodiment of the system 1 for providing infrastructure services the updated mobile node configurations MI-CONFIG of the mobile infrastructure nodes 3 of the mobile infrastructure 2 are deployed in step S3 of the continuous virtual cell configuration process shown in Fig.2 in the respective mobile infrastructure nodes 3 to execute infrastructure services.

In a possible embodiment of the system 1 for providing infrastructure services the mobile infrastructure 2 comprises a non-terrestrial mobile infrastructure having mobile infrastructure nodes 3 formed by satellites SATs as illustrated in the exemplary embodiment shown in Fig.1 following predefined orbits and flying over the virtual cells VCs provided on ground. In a possible embodiment a geographic availability of the satellites SATs with respect to the virtual cells VCs on the ground is determined on the basis of orbit data provided by the satellites SATs.

In a possible alternative embodiment of the system for providing infrastructure services the mobile infrastructure 2 comprises a terrestrial mobile infrastructure having mobile infrastructure nodes 3 formed by unmanned aerial vehicles (UAVs) such as drones or automated guided vehicles (AGVs) flying over the virtual cells VCs provided on ground.

In a possible embodiment of the system 1 for providing infrastructure services the application nodes 4 comprise mobile application nodes and not-mobile application nodes. In a possible embodiment of the system 1 for providing infrastructure services the virtual cells VCs comprise a variable size and variable shape and a variable geo-location in a targeted geographical area.

The invention further provides a method for providing infrastructure services by infrastructure nodes 3 of a mobile infrastructure 2 to applications running on application nodes 4 hosted inside virtual cells VCs clustering applications with common application requirements geographically, wherein a virtual cell configuration process is performed continuously by an orchestration system 5 to assign infrastructure nodes 3 to the virtual cells VCs according to application requirements.

In the system 1 as illustrated in Fig.1 both, the infrastructure nodes 3, and the applications nodes 4 can be mobile. Consequently, its orchestration system 5 is adapted to perform a continuous orchestrating of the available resources and resource demands. The system 1 is based on the concept of a virtual infrastructure. The virtual cells VCs take advantage of the locality of terrestrial application components and nodes.

Virtual cells VCs define spatial areas in which services with certain SLOs (Service Level Objectives) are provided by the infrastructure nodes 3. The application nodes 4 only need to sign into their assigned virtual cell VC and the orchestration system 5 then assigns the NT infrastructure nodes 3 to the virtual cells VCs according to the Service Level Objectives SLOs and corresponding resource demands.

Service Level Agreements SLAs are used externally to define an agreement between a company's service and its paid users. Service Level Objectives SLOs are objectives that are measured internally to determine whether the Service Level Agreement SLA is being met. Service Level Objectives SLOs comprise specific measurable characteristics of the Service Level Agreement SLA such as availability, throughput, frequency, response time, or quality

By making use of virtual cells VCs the changing infrastructure is hidden from the application nodes 4, such that they can be designed in a similar manner as before in existing conventional systems with static infrastructure. The method and system according to the present invention allow for provision of a predictable and deterministic resource availability for applications in geographic areas, while the communication and computing infrastructure follows specific mobility patterns.

Typically, communication and computing infrastructure demands for industrial use cases are solved locally with terrestrial infrastructures. This significantly limits the target areas and feature set which can be realized in general for a technical stand-point but also in a cost-efficient manner.

In case communication and computing demands cannot be fulfilled by a terrestrial solution, typically specific, proprietary solutions with non-terrestrial systems are developed. Often, terrestrial systems offer access to computing infrastructures via "bent-pipe" style orbital communication. These traditional approaches prevent bringing algorithms close to the data in order to realize low delay actions - large sets of data usually have to be transported to computing infrastructures, leading to very high costs.

Different types of applications can be present on ground and virtual cells VCs are used to cluster them geographically. A mobile infrastructure 2 with satellites SATs as mobile infrastructure nodes 3 as illustrated in Fig.1 provides communication and computing capabilities. The satellites SATs shown in Fig.1 fly over the virtual cells VCs with appropriate configurations to fulfil the application requirements of applications run on application nodes 4 within a virtual cell VC. Virtual cell configurations and satellite configurations are updated over time to take mobility of the infrastructure 2 into account.

A virtual cell VC is defined by applications that interact, share, offer, or consume common services, and thus belong together. Virtual cells VCs can cover a fixed geographic area or can move in case the applications on ground are mobile. Also, size and shape of a virtual cell VC can vary. Virtual cells VCs can also host different applications/services as long as their requirements are compatible.

Applications usually offer services in an industrial context. Examples of applications comprise electricity infrastructure control applications, smart factory applications, transportation applications or critical infrastructure operations. The applications can - in an industrial context - have application requirements for the used infrastructure, going beyond the typical bandwidth and storage SLOs known from consumer market applications/services. Application requirements of applications run on application nodes 4 can include all connectivity and communication related SLOs (e.g., delay, bandwidth, packet loss, jitter), computing requirements (e.g., CPU, RAM; storage), service requirements (e.g., resilience and related mechanisms, AAA, service dependencies, availability and related mechanisms, scalability), as well as operational requirements (e.g., geographic availability, safety, security, manageability, business requirements).

The virtual cell configuration VC-CONFIG (VCConfig(t)) of a virtual cell VC is defined for different times The last virtual cell configuration (VCConfig(t-1)) stays valid until it is outdated by a newer virtual cell configuration (VCConfig(t)).

The virtual cell configuration VC-CONFIG (VCConfig(t)) can comprise different applications that are present and running on an application node 4 inside a virtual cell VC, including all requirements and configurations of relevant services, application device configurations (e.g., AAA, addressing) of application nodes 4, and the targeted geographical area.

Such a virtual cell configuration VC-CONFIG can also include further configuration artefacts, such as virtual network functions of the infrastructure provider (e.g., for connectivity to other cells, AAA), virtual network functions of the user (e.g., application specific functionality/protocol support, basic services and traffic management for special addressing), workload specification in terms of computing demands (e.g., RAM, CPU, storage, GPU, Al processing), and workload runtime/environment reservations.

Usually, the virtual cell configuration VC-CONFIG (VCConfig(t) is static for defined time spans [t, t+1], e.g., the type of application does not change, the application requirements do not change, the application devices or application nodes 4 do not change.

The application nodes 4 can comprise application devices that are adapted to operate application artefacts, components, and/or services. Their configuration depends on a mobile infrastructure status and eventually require updates when virtual cell configurations VC-CONFIG change.

In the exemplary embodiment of Fig. 2 the mobile Infrastructure 2 includes all orbital infrastructure components, i.e. the infrastructure nodes 3 such as satellites SATs with their computing capabilities, their communication links, and eventually their sensing capabilities- The components of the mobile infrastructure 2 are used to serve the requirements of the virtual cells VCs.

The infrastructure nodes 3 such as satellites SATs can follow predefined paths, in particular orbits. A deterministic geographic availability of each infrastructure node 3 with respect to defined virtual cells VCs can be calculated on the basis of path data of mobile infrastructure nodes 3 of the mobile infrastructure 2 of the system1. The infrastructure nodes 3 offer computing and communication capabilities and potentially also sensing capabilities. The infrastructure nodes 3 create a shared resource pool available to serve service requirements of the different virtual cells VCs they enter and leave over time.

Depending on the virtual cells VCs served by an infrastructure node 3 such as a satellite SAT the configuration set SatConfig of this infrastructure node 3 is defined. A mobile infrastructure node configuration of a satellite SatConfig (#S, t) is valid for satellite number #S and time t until it is overwritten by SatConfig (#S, t+1).

The orchestration system 5 performs a continuous virtual cell configuration process as illustrated in Fig.2 by calculating the virtual cell configurations VC-CONFIG of all virtual cells VCs for all relevant times t. The relevant times t are defined by required changes of virtual cell configurations VC-CONFIG due to mobility of infrastructure nodes 3. As soon as the virtual cell configurations VC-CONFIG are calculated, the mobile infrastructure node configurations SatConfig for the satellite infrastructure nodes 3 can be derived. As soon as all configurations are calculated (or updates are created) they are deployed in step 3 of the virtual cell configuration process illustrated in Fig. 2 to the infrastructure nodes 3 and application devices of the application nodes 4.

The continuous virtual cell configuration process shown in Fig. 2 receives inputs from applications, its corresponding application nodes 4, and capability offerings from infrastructure nodes 3. Applications and the corresponding application nodes 4 comprise application requirements in terms of connectivity, reliability, resilience, coverage, compute power, infrastructure services (e.g., data bus, data lake), data rates, geographic location, etc. (see section above). The infrastructure nodes 3 articulate their capabilities (e.g., available compute power, communication technologies), as well as their geographic availability (e.g., satellites provide orbit data). Based on these inputs, the continuous virtual cell configuration process shown in Fig.2 can perform its calculations and can perform the configuration of the mobile infrastructure 2 in three steps S1 to S3.

In a first step S1 of the continuous virtual cell configuration process shown in Fig. 2 virtual cells VCs are defined, including the different applications active for the respective virtual cell. For example in Fig.1 the virtual cell VC01 comprises smart factory applications as well as transportation applications in the same area which have compatible application requirements.

The application requirements are considered so that mixing of non-compatible service requests are avoided. Compatibility of application requirements means that the resource allocation mechanism considers requirements competing for same resources in a way so that resource overbooking within a virtual cell VC, as well as resource overbooking by neighbouring virtual cells VCs are solved. In case that there are application requirements that can simply be not fulfilled, the service requests are denied - following the service orchestration paradigm of industrial networks. The resulting virtual cells VCs can be spatially overlapping, their size and shape can vary over time, and their geo-location can change over time. Still the proposed system 1 also allows for a static spatial definition of virtual cells VCs.

In a second step S2 of the virtual cell configuration process illustrated in Fig.2 also the different capabilities of the mobile infrastructure nodes 3 are considered, and configuration artefacts are created to define configuration sets for the mobile infrastructure nodes. Thus, valid virtual cell configurations VC-CONFIG as well as configuration sets MI-CONFIG for the mobile infrastructure nodes 3 of the mobile infrastructure 2 and application devices of application nodes 4 are calculated for different times (t, t+1, t+2, ...).

The deployment of the mobile infrastructure configuration MI-CONFIG is performed in step S3 of the continuous virtual cell configuration process shown in Fig. 2. The calculated configuration settings are deployed to the infrastructure devices of the mobile nodes 3 so that local engines can execute the reconfiguration processes at the given times t when these configurations should be set into action. The configurations are active until newer configurations at times t+1 are activated. These infrastructure device configurations then serve the pre-defined configurations of the application settings of the virtual cell configurations, so that no changes on application device level are required.

The system 1 according to the present invention provides a significant reduction of configuration complexity for industrial applications and corresponding devices, as the mobility of the communication and computing infrastructure is completely hidden from the application by definition of virtual cells VCs, which are continuously served by the mobile infrastructure nodes 3, which are automatically reconfigured. The system configuration is simplified as it is based on virtual cells VCs only. An update of a virtual cell VC will only affect co-located virtual cells VCs.

It is not necessary to consider a system behavior beyond this horizon.

The system 1 according to the present invention provides predictable and deterministic resource availability for applications. This paradigm shifts the viewpoint from a system/infrastructure centric approach to application and usability per cell. This mechanism can be applied to composed systems of systems as well. Here, different infrastructure system providers/operators can contribute resources and applications and services from virtual cells VCs can use them.

The system 1 according to the present invention allows integration of heterogeneous infrastructure components. The system 1 according to the present invention allows the provision of a business model where virtual infrastructure providers offer resource access to systems with heterogeneous nodes and different capabilities. This even allows to define virtual resource cells realized by multiple resource providers.

The system and method according to the present invention is also applicable for a terrestrial mobile infrastructure e.g. attached to AGVs and UAVs based infrastructures.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

## Claims

1. A system (1) for providing infrastructure services, the system comprising:
a mobile infrastructure (2) including mobile infrastructure nodes (3) adapted to provide infrastructure services for application nodes (4) hosted in virtual cells (VCs) clustering applications with common application requirements geographically and
an orchestration system (5) adapted to perform a virtual cell configuration process to assign infrastructure nodes (3) to the virtual cells (VCs) according to application requirements.

2. The according to claim 1, wherein the orchestration system (5) is adapted to update during the virtual cell configuration process continuously virtual cell configurations of virtual cells (VCs) in response to application requirements received from application nodes (4) and/or in response to capabilities offered by the mobile infrastructure nodes (3) of the mobile infrastructure (2) and/or in response to a geographic availability of the mobile infrastructure nodes (3) with respect to the virtual cells (VCs).

3. The system according to claim 2, wherein mobile node configurations of mobile infrastructure nodes (3) of the mobile infrastructure (2) are updated during the continuous virtual cell configuration process depending on the virtual cell configurations of virtual cells (VCs) served by the respective mobile infrastructure nodes (3).

4. The system according to claim 3, wherein the updated mobile node configurations of the mobile infrastructure nodes (3) are deployed during the continuous virtual cell configuration process in the respective mobile infrastructure nodes (3) to execute infrastructure services.

5. The system according to any of the preceding claims, wherein the virtual cell configuration of a virtual cell (VC) comprises applications present inside the respective virtual cell (VC) including the application requirements of the applications and comprises configurations of application nodes (4) running the applications inside the respective virtual cell (VC) and comprises a targeted geographical area.

6. The system according to claim 5, wherein the virtual cell configuration of a virtual cell (VC) further comprises virtual network functions of the infrastructure provider, virtual network functions of the user, workload specifications in terms of computing demands and workload runtime reservations.

7. The system according to any of the preceding claims, wherein the application requirements include service level objectives (SLOs) of services to be provided by the mobile infrastructure nodes (3) of the mobile infrastructure (2) of the dynamic system (1).

8. The system according to claim 7, wherein the service level objectives (SLOs) comprise bandwidth related service level objectives, storage related service level objective and communication related service level objectives, wherein the application requirements in particular include service requirements and operational requirements.

9. The system according to any of the preceding claims, wherein the mobile infrastructure (2) comprises a non-terrestrial mobile infrastructure having mobile infrastructure nodes (3) formed by satellites following predefined orbits and flying over the virtual cells (VCs) provided on ground.

10. The system according to claim 9, wherein a geographic availability of the satellites with respect to the virtual cells (VCs) on the ground is determined on the basis of orbit data provided by the satellites.

11. The system according to any of the preceding claims, wherein the mobile infrastructure (2) comprises a terrestrial mobile infrastructure having mobile infrastructure nodes formed by unmanned aerial vehicles or automated guided vehicles flying over the virtual cells (VCs) provided on ground.

12. The system according to any of the preceding claims, wherein the application nodes (4) comprise mobile application nodes and not-mobile application nodes.

13. The system according to any of the preceding claims, wherein the virtual cells (VCs) comprise a variable size and variable shape and a variable geo-location in a targeted geographical area.

14. A method for providing infrastructure services by infrastructure nodes (3) of a mobile infrastructure (2) to applications running on application nodes (4) hosted inside virtual cells (VCs) clustering applications with common application requirements geographically, wherein a virtual cell configuration process is performed continuously by an orchestration system (5) to assign infrastructure nodes (3) to the virtual cells (VCs) according to application requirements.

15. The method according to claim 14, wherein the virtual cell configuration process comprises:
providing (S1) virtual cells (VC) defined by different applications active for the respective virtual cell (VC) and having common application requirements;
updating (S2) mobile node configurations of mobile infrastructure nodes (3) of the mobile infrastructure (2) depending on virtual cell configurations of virtual cells (VCs) served by the respective mobile infrastructure nodes (3); and
deploying (S3) the updated mobile node configurations of the mobile infrastructure nodes (3) in the respective mobile infrastructure nodes (3) to execute infrastructure services.
